# DEMANDE DE BREVET EUROPEEN

(11) **EP 4 468 438 A1**
(43) Date de publication de la demande: **27.11.2024**
(21) Numéro de dépôt: 24177491.8
(22) Date de dépôt: 22.05.2024
(51) Int. Cl.: H01M 10/0562, H01M 10/0525, H01M 10/054, H01M 10/0565, H01M 10/0587, H01M 4/38

(54) **PROCEDE DE REALISATION D'UNE BATTERIE LITHIUM-METAL OU SODIUM-METAL TOUT-SOLIDE A PARTIR D'UN ACCUMULATEUR ELECTROCHIMIQUE METAL-ION A ELECTROLYTE LIQUIDE, A DES FINS D'ESSAIS ABUSIFS THERMIQUES**

(30) Priorité: 22.05.2023 FR 2304999
(71) Demandeur: Commissariat à l'Energie Atomique et aux Energies Alternatives, 75015 Paris (FR)
(72) Inventeur: CHARBONNEL, Juliette, 38054 GRENOBLE CEDEX 09 (FR); VINCENT, Rémi, 38054 GRENOBLE CEDEX 09 (FR); VINCENS, Christophe, 38054 GRENOBLE CEDEX 09 (FR); GUTEL, Elise, 38054 GRENOBLE CEDEX 09 (FR)
(74) Mandataire: Cabinet Nony

(57) **Abrégé**

Procédé de réalisation d'une batterie lithium-métal ou sodium-métal tout-solide à partir d'un accumulateur électrochimique métal-ion à électrolyte liquide, à des fins d'essais abusifs thermiques.

L'invention concerne un procédé de réalisation d'une batterie lithium-métal ou sodium-métal tout-solide directement à partir d'un accumulateur métal-ion à électrolyte liquide complètement réalisé et qui présente un état de charge électrique prédéterminé, de préférence égal à 100%.

## Description

### Domaine technique

La présente invention concerne le domaine des accumulateurs électrochimiques, et plus particulièrement celui des accumulateurs lithium-métal ou sodium-métal à électrolyte solide, aussi désignés ci-après batteries tout-solide.

Plus particulièrement, l'invention a trait à la réalisation d'une batterie lithium-métal ou sodium-métal tout-solide, à des fins d'essais abusifs thermiques.

### Technique antérieure

Un accumulateur électrochimique doit fonctionner dans une plage de température définie, généralement inférieure à 70°C à la surface extérieure de son emballage rigide sous la forme d'un boitier, sous peine de dégrader ses performances, voire de le dégrader physiquement jusqu'à destruction.

On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques.

Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «Thermal Runaway»).

Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Par ailleurs, les fabricants de batterie ont deux objectifs majeurs : augmenter constamment la densité énergétique de leurs batteries afin d'en améliorer les performances et améliorer la sécurité de leurs batteries.

Ainsi, l'utilisation de matériaux à haute capacité énergétique mais avec un comportement fortement exothermique en cas d'emballement thermique d'un accumulateur est de plus en plus courante : [1]. En ce qui concerne le phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

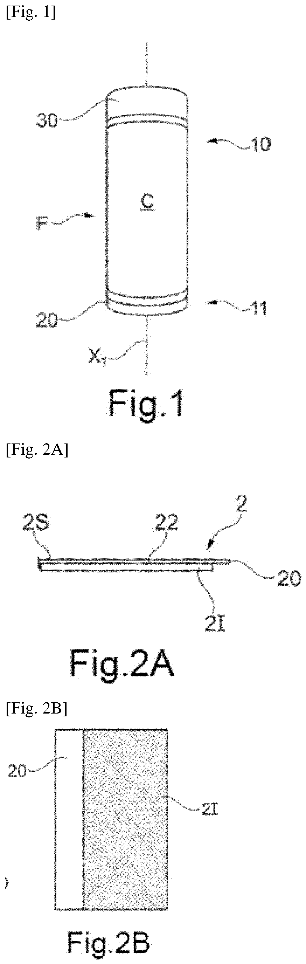

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

D'après la littérature, comme la publication [2], l'utilisation de batteries tout-solide permettrait, d'accroître la densité énergétique tout en supprimant les éléments qui seraient la cause des emballements thermiques, à savoir les solvants organiques de l'électrolyte liquide et les polymères du séparateur, susceptibles de s'enflammer ou fuiter et donc d'améliorer leur sécurité [3].

Ainsi, si la densité d'énergie d'une batterie lithium-ion actuelle est d'environ 200 Wh/kg : [4], les batteries lithium-métal tout-solide permettraient d'atteindre une densité d'énergie supérieure à 500 Wh/kg: [5]. Les batteries sodium-métal pourraient atteindre une densité d'énergie équivalentes à celles au lithium: [6].

Les technologies lithium-métal et sodium-métal tout-solide permettraient donc au minimum de doubler la densité d'énergie des batteries.

Cela étant, les batteries lithium-métal tout-solide ne sont pas commercialisées car chaque électrolyte solide a au moins un problème majeur de développement à résoudre : [5].

A ce jour, plusieurs solutions d'essais ont été réalisés à l'échelle des matériaux pour évaluer la stabilité du lithium-métal avec des électrolytes solides : [7].

En outre, des modèles d'emballement thermique ont été effectués sur des batteries lithium-métal tout-solide : [8].

En revanche, la technologie des batteries lithium-métal ou sodium-métal tout-solide n'étant pas mature, aucun essai abusif n'a été réalisé à l'échelle d'une batterie tout-solide pour vérifier l'hypothèse précitée de la littérature sur l'amélioration qu'une batterie tout-solide apporterait sur la sécurité d'un point de vue thermique.

Il existe un besoin d'une solution qui permette de réaliser des essais abusifs à l'échelle d'une batterie lithium-métal ou sodium-métal tout-solide afin de valider celle-ci.

Le but général de l'invention est alors de répondre au moins en partie à ce besoin.

### Exposé de l'invention

Pour ce faire, l'invention a tout d'abord pour objet un procédé de réalisation d'une batterie lithium-métal ou sodium-métal tout-solide comprenant les étapes suivantes :
a/ réalisation d'un accumulateur électrochimique lithium-métal ou sodium-métal comprenant un faisceau électrochimique comportant au moins une cellule électrochimique constituée d'une cathode et d'une anode de part et d'autre d'un séparateur imprégné d'un électrolyte liquide, la cathode comprenant un substrat, formé d'un feuillard métallique qui supporte dans sa portion centrale un matériau actif d'insertion d'ions lithium ou sodium, l'anode étant constituée d'un substrat, formé d'un feuillard lithium ou sodium métallique et un emballage agencé pour contenir le faisceau électrochimique avec étanchéité ;
b/ charge électrique de l'accumulateur de sorte à ce qu'il atteigne un état de charge électrique prédéterminé ;
c/ perçage de l'emballage ;
d/ enlèvement de l'électrolyte liquide ;
e/ ouverture de l'emballage ;
f/ séparation de l'anode, de la cathode et du séparateur les uns des autres ;
g/ dépôt par enduction d'au moins une couche d'encre formant un électrolyte tout-solide, sur l'électrode parmi l'anode ou la cathode, qui est chargée électriquement à l'état prédéterminé ;
h/ réalisation d'un faisceau électrochimique comportant au moins une cellule électrochimique constituée de la cathode séparée selon l'étape f/ et revêtue de la couche électrolyte tout-solide déposée selon l'étape g/ et soit de l'anode (3) séparée selon l'étape f/ soit d'une nouvelle anode constituée d'un substrat, formé d'un feuillard lithium ou sodium métallique.

Selon un mode de réalisation avantageux, le procédé comprend une étape i/ mise en place d'un emballage agencé pour contenir le faisceau électrochimique (F') avec étanchéité. Cette étape i/ permet de représenter un accumulateur en conditions réelles d'utilisation.

L'état de charge prédéterminé selon l'étape b/ est avantageusement compris entre 30 et 100%, de préférence entre 85 et 100%, de préférence encore de 100%.

Selon une configuration avantageuse, les faisceaux électrochimiques sont chacun constitué d'une seule cellule électrochimique enroulée sur elle-même par bobinage.

De préférence, l'étape d/ est réalisée par évaporation sous vide.

De préférence encore, l'évaporation sous vide est réalisée à au moins 70°C pendant une durée d'au moins 24 heures, de préférence égale à 48 heures.

Selon une variante avantageuse de réalisation, l'étape g/ d'enduction est réalisée au moyen d'une racle d'enduction fixe au-dessus de l'électrode à enduire tirée à vitesse sensiblement constante.

Avantageusement, l'étape g/ d'enduction est réalisée de sorte à ce que l'épaisseur de la couche d'électrolyte tout-solide sur l'électrode est comprise entre 10 et 20 µm.

Selon un autre mode de réalisation avantageux, le procédé comprend, entre l'étape f/ et l'étape g/, une étape f1/ de nettoyage de la cathode, et optionnellement de l'anode, avec du carbonate de diméthyle (DMC).

Dans la configuration où les emballages sont des boitiers, les étapes a/ et i/ comprennent le sertissage d'un couvercle de boitier.

Avantageusement, le matériau de l'encre formant l'électrolyte tout-solide, déposée selon l'étape g/, est choisi parmi les polymères, les oxydes et les sulfures ou un mélange de ceux-ci.

Avantageusement encore, le matériau de l'encre est choisi parmi le poly(oxyéthylène) (POE), une céramique de type Li₇La₃Zr₂O₁₂ (LLZO).

L'invention a également pour objet un procédé d'essais abusifs thermiques d'une batterie tout-solide réalisée selon le procédé décrit précédemment.

Ainsi, l'invention consiste essentiellement à réaliser une batterie lithium-métal ou sodium-métal tout-solide directement à partir d'un accumulateur lithium-ion ou sodium-métal à électrolyte liquide complètement réalisé et qui présente un état de charge électrique prédéterminé, de préférence égal à 100%.

Après avoir complètement enlevé l'électrolyte liquide, ouvert l'accumulateur et séparer les uns des autres les électrodes et le séparateur constituant la cellule électrochimique de l'accumulateur, on dépose par enduction directement sur la cathode chargée électriquement à l'état prédéterminé, une couche d'encre dont le matériau est celui d'un électrolyte tout-solide.

Après avoir reconstitué un faisceau électrochimique « tout-solide » à partir de la cathode enduite et de l'anode séparée ou d'une nouvelle anode constituée d'un substrat formé à partir d'un feuillard lithium ou sodium métallique, on procède à la mise en place de son emballage et on obtient au final un accumulateur tout-solide dont l'électrochimie est active bien que peu performante du fait d'une résistance interne très importante.

L'avantage primordial d'une batterie lithium-métal ou sodium-métal tout-solide obtenue grâce au procédé selon l'invention est que suite à un essai abusif thermique, par exemple selon la norme [3] avec une rampe de température de 5 à 20 °C/min, ladite batterie se comportant en emballement thermique comme une batterie tout solide réelle.

Une batterie lithium-métal ou sodium-métal tout-solide obtenue selon l'invention peut être de géométrie cylindrique ou prismatique ou à empilement.

D'autres avantages et caractéristiques ressortiront mieux à la lecture de la description détaillée, faite à titre illustratif et non limitatif, en référence aux figures suivantes.

### Brève description des dessins

[Fig.1] la [Fig.1] est une vue photographique en perspective d'un faisceau électrochimique d'un accumulateur lithium-métal ou sodium-métal à électrolyte liquide, le faisceau étant constitué d'une seule cellule électrochimique enroulée sur elle-même par bobinage.
[Fig.2A][Fig.2B] les figures 2A et 2B sont des vues respectivement de côté et de dessus d'une électrode positive du faisceau électrochimique selon la [Fig.1].
[Fig.3A][Fig.3B] les figures 3A et 3B sont des vues respectivement de côté et de dessus d'une électrode négative du faisceau électrochimique selon la [Fig.1].
[Fig.4] [Fig.4A] [Fig.4B] [Fig.4C] [Fig.4D] les figures 4 et 4A à 4D sont des vues en perspective et de dessus de chacun des deux collecteurs de courant soudé à l'une des extrémités latérales d'un faisceau électrochimique selon l'état de l'art.
[Fig.5] la [Fig.5] est une vue en coupe axiale d'une partie d'un accumulateur lithium-métal ou sodium-métal à électrolyte liquide selon l'état de l'art.
[Fig.6] la [Fig.6] est une reproduction photographique d'une électrode chargée électriquement à un état de charge prédéterminé issue d'un accumulateur lithium-métal ou sodium-métal tel que celui de la [Fig.5] duquel l'électrolyte liquide a préalablement été enlevé.
[Fig.7] la [Fig.7] est une reproduction photographique de l'électrode selon la [Fig.6] revêtue d'une couche d'encre d'un électrolyte tout solide.
[Fig.8] la [Fig.8] est une vue photographique en perspective d'un faisceau électrochimique d'une batterie lithium-métal ou sodium-métal tout-solide selon l'invention, le faisceau étant constitué d'une seule cellule électrochimique enroulée sur elle-même par bobinage.

### Description détaillée

Par souci de clarté, les mêmes références désignant les mêmes éléments d'un accumulateur au lithium-métal ou sodium-métal à électrolyte liquide selon l'état de l'art et une batterie tout-solide selon l'invention sont utilisées pour toutes les figures 1 à 11.

On précise que les différents éléments selon l'invention sont représentés uniquement par souci de clarté et qu'ils ne sont pas à l'échelle.

On précise également que les termes de « longueur » et « latéral » se rapportant à une électrode sont à considérer lorsqu'elle est à plat avant son bobinage.

Les termes de «hauteur » et « latéral » se rapportant au faisceau électrochimique sont à considérer en configuration à la verticale avec ses extrémités latérales respectivement sur le haut et sur le bas.

Pour pouvoir valider l'hypothèse généralement admise que la technologie des batteries tout-solide améliore la sécurité, et en particulier les technologies lithium-métal et sodium-métal tout-solide à forte densité d'énergie, les inventeurs ont pensé à réaliser une batterie tout-solide à partir d'un accumulateur lithium-métal ou sodium-métal à électrolyte liquide tel que directement utilisé pour des essais abusifs thermiques.

Les données permettant de caractériser la sécurité de batteries/accumulateurs suite à l'emballement thermique sont par exemple l'énergie libérée pendant l'emballement, la quantité, le débit et le type de gaz.

On décrit le procédé de réalisation d'une batterie lithium-métal et sodium-métal tout-solide selon l'invention.

Etape a/: On réalise un accumulateur lithium-métal ou sodium-métal à électrolyte liquide comme selon l'état de l'art, en référence aux figures 1 à 5.

On a reproduit à la [Fig.1] la photographie d'un faisceau électrochimique F de forme allongée selon un axe longitudinal X1 et comportant une seule cellule électrochimique C telle qu'elle est usuellement enroulée par bobinage avant les étapes de logement dans un boitier, de raccordement électrique aux bornes de sortie de l'accumulateur et son imprégnation par un électrolyte. La cellule C est constituée d'une anode 3 et d'une cathode 4 de part et d'autre d'un séparateur (non visible) adapté pour être imprégné de l'électrolyte. Comme cela est visible, l'une 10 de ses extrémités latérales du faisceau F est délimitée par la bande 30 de l'anode 3, tandis que l'autre 11 de ses extrémités latérales est délimitée par la bande 20 de la cathode 2 non revêtue.

Par « bande non revêtue » ou « rive », on entend ici et dans le cadre de l'invention, une portion latérale d'une feuille métallique, aussi appelée feuillard, formant un collecteur de courant, qui n'est pas recouverte d'un matériau d'insertion aux ions métal, tel que le lithium dans le cas d'un accumulateur lithium-métal ou le sodium pour un accumulateur sodium-métal.

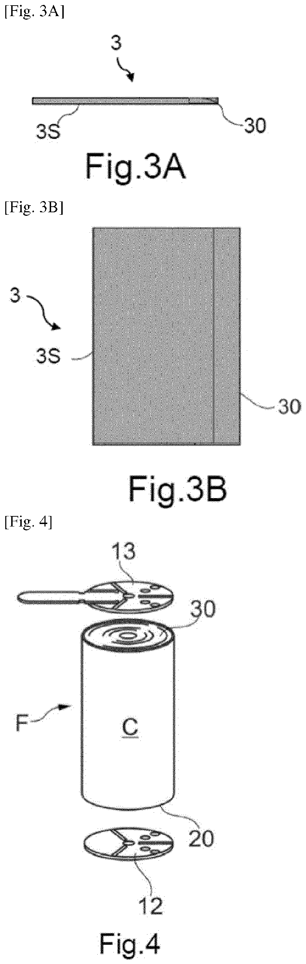

On a représenté plus en détail, respectivement en figures 2A et 2B et en figures 3A et 3B, une électrode positive ou cathode 2 et une électrode négative ou anode 3 à partir desquelles un faisceau électrochimique actuel est réalisé par bobinage avec un séparateur 4 intercalé entre cathode 2 et anode 3.

La cathode 2 est constituée d'un substrat 2S formé d'un feuillard métallique qui supporte dans sa portion centrale 22, un matériau actif d'insertion au lithium ou sodium 2I, tandis que sa bande latérale (rive) 20 est dépourvue de matériau actif d'insertion.

L'anode 3 est quant à elle constituée uniquement d'un substrat 3S formé d'un feuillard en lithium ou sodium métallique comprenant une bande latérale 30.

A partir d'un faisceau électrochimique tel qu'illustré à la [Fig.1], on réalise généralement un tassage axial des feuillards d'électrodes au niveau de leurs rives 20, 30.

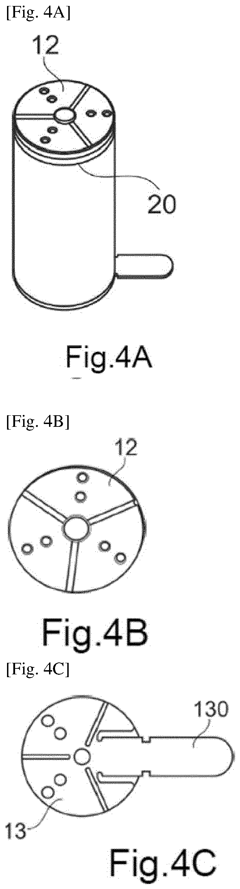

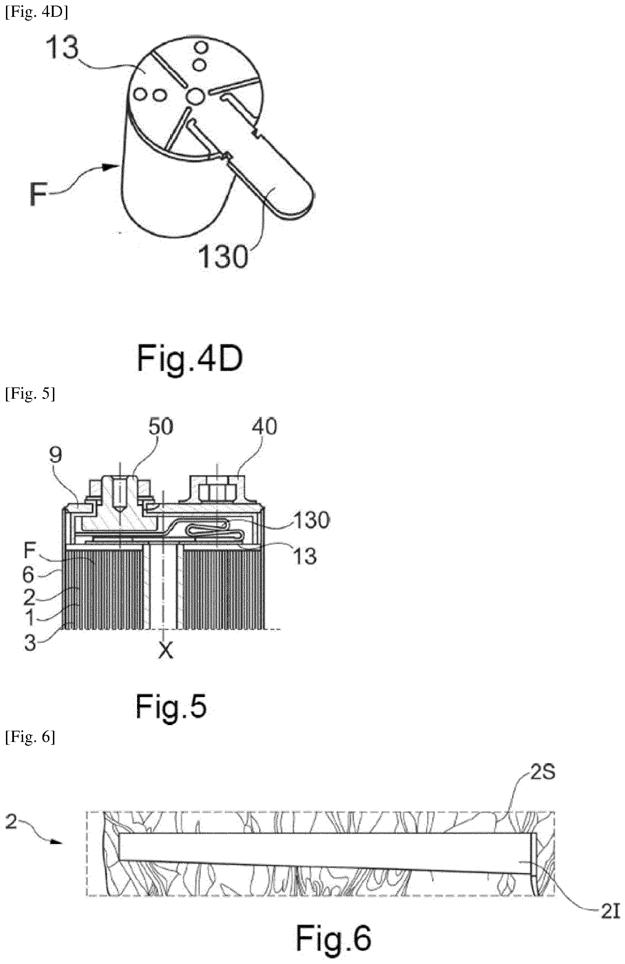

Une fois le tassage réalisé, on soude l'une des extrémités latérales 11 du faisceau F, de préférence, avec un collecteur de courant 12 usuel sous la forme d'un disque plein métallique, lui-même destiné à être soudé par la suite avec le fond 8 du boitier 6 d'accumulateur (figures 4, 4A, 4B).

On procède de la même manière entre l'autre des extrémités latérales 10 du faisceau, et une partie de collecteur de courant 13 usuel sous la forme d'un disque plein métallique, percé en son centre et d'une languette 130 faisant saillie latéralement du disque 13 (figures 4, 4C, 4D).

Pour finaliser la réalisation définitive de l'accumulateur, on procède usuellement comme suit.

On introduit le faisceau avec le collecteur 13 dans un récipient rigide en aluminium formant uniquement l'enveloppe latérale 7 du boitier 6. Lors de cette étape, pour que la languette 130 ne gêne pas l'introduction, on replie celle-ci vers le haut.

On soude le collecteur 12 avec le fond 8 du boitier 6.

On soude le collecteur 13 à un pôle négatif 50 formant une traversée d'un couvercle 9 de boitier 6.

On soude alors le couvercle 9 au récipient rigide métallique 7.

Puis on effectue une étape de remplissage du boitier 6 à l'aide d'un électrolyte liquide, au travers d'une ouverture débouchante non représentée qui est pratiquée dans le couvercle 9.

La réalisation de l'accumulateur prend fin par le bouchage de l'ouverture de remplissage.

Un exemple d'accumulateur lithium-métal ou sodium-métal à électrolyte liquide est montré à la [Fig.5]: une des bornes de sortie 50, en général la borne négative, traverse le boîtier 6 de manière isolée électriquement et est raccordée électriquement à une électrode de même polarité du faisceau électrochimique F au moyen du collecteur de courant 13, dont la languette plane 130 est repliée sur elle-même. L'autre des bornes de sortie 40, en général la borne positive , est quant à elle soudée au couvercle 9 du boîtier 6 lui-même raccordé électriquement à l'électrode du faisceau électrochimique F de polarité opposée à celle de la borne 50.

On peut aussi ne pas fermer de manière définitive le boitier 6 d'accumulateur une fois le remplissage avec l'électrolyte liquide réalisé. Par exemple, un ruban adhésif étanche à l'air peut être positionné sur le trou de remplissage de l'électrolyte liquide, afin de rendre l'accumulateur étanche. Le fait de ne pas fermer de manière définitive le boitier 6 à cet état de charge nul de l'accumulateur a pour avantage qu'aucun emballement thermique ne peut se déclencher.

Etape b/: On charge électriquement l'accumulateur de sorte à ce qu'il atteigne un état de charge électrique prédéterminé, avantageusement de 100%. Aucun emballement thermique n'est possible à cet état de charge. L'électrode négative 3 est ainsi à l'état de charge prédéterminé et l'électrode positive 2 est totalement déchargée. Un autre état de charge inférieur à 100% peut être choisi.

Etape c/ : On procède au perçage du boitier 6. Par exemple, le ruban adhésif est retiré du trou de remplissage.

Etape d/ : On procède alors à enlèvement de tout l'électrolyte liquide de l'accumulateur sans l'ouvrir et en toute sécurité du fait de la charge électrique préalable. Pour ce faire, on place l'accumulateur dans un sas tiré sous vide et chauffé à 70°C pendant 48 heures. L'électrolyte liquide est donc enlevé par évaporation sous vide sans détériorer les autres composants de l'accumulateur

Etape e/ : On réalisé alors l'ouverture du boitier 6.

Etape f/ : On sépare alors la cathode 2 chargée à l'état de charge prédéterminée, de préférence égal à 100%, l'anode 3 et le séparateur 1 les uns des autres.

Etape f1/ (optionnelle) : On nettoie la cathode 2 à l'état de charge prédéterminée, de préférence égal à 100%, dans un bain de carbonate de diméthyle (DMC), typiquement pendant une durée de 3 minute. Optionnellement, l'anode 3 peut aussi être nettoyée de manière identique.

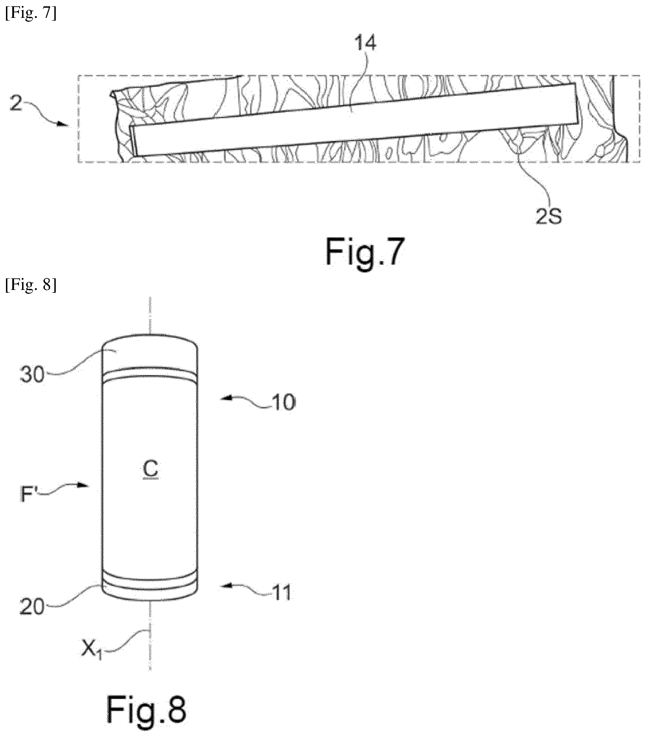

Etape g/ : On dépose par enduction une couche d'encre 14 formant un électrolyte tout-solide, sur le matériau d'insertion 2I de la cathode 2 chargée électriquement à l'état de charge prédéterminé, de préférence égale à 100%. Les figures 6 et 7 montrent la cathode 2 respectivement avant et après un tel dépôt.

Les méthodes de réalisation d'encre d'électrolyte tout-solide et d'enduction connues sont les suivantes :
- les matériaux de l'électrode positive et de l'électrolyte solide sont mélangés ensemble sous forme d'encre puis cette encre est enduite sur un support collecteur de courant [9],
- les électrolytes solides peuvent être agglomérés sous forme de pastille.
   L'électrode positive peut contenir ou non de l'électrolyte solide, comme du LLZO: [10],
- l'électrolyte solide peut être déposé selon une réaction dite solide sur un support où l'électrode positive a été déposée avant : [11].

Les inventeurs ont judicieusement pensé à partir de la première méthode citée [9].

Et ils sont partis d'une encre d'électrolyte tout-solide mais qui ne contient aucun matériau actif d'insertion d'ions. La viscosité de l'encre est adaptée en fonction du matériau 2I sur lequel l'encre est déposée.

L'épaisseur d'enduction peut être réglée à 50 µm au-dessus de celle de la cathode 2, afin d'obtenir une épaisseur finale de la couche 14 de 10 à 20 µm.

Avantageusement, l'enduction est réalisée avec une racle fixe tandis que la cathode 2 est tirée à vitesse constante, typiquement de l'ordre de quelques mm/s.

Etape h/ : On réalise alors par bobinage un faisceau électrochimique (F') comportant à partir de la cathode 2 revêtue de la couche d'électrolyte tout-solide déposée selon l'étape g/ et soit de l'anode 3 séparée préalablement selon l'étape f/, soit d'un nouveau feuillard métallique de lithium ou de sodium ([Fig.8]).

Etape i/ : On met en place le faisceau électrochimique (F') dans le boitier 6 et on procède comme usuellement avec un accumulateur lithium-métal ou sodium-métal comme décrit précédemment mais, bien entendu sans aucun remplissage par électrolyte liquide.

La batterie lithium-métal ou sodium-métal tout-solide ainsi obtenue présente une électrochimie active bien que peu performante du fait d'une résistance interne très importante.

On constate que lorsqu'on fait subir à cette batterie tout-solide un essai abusif thermique normalisé avec une rampe de 5 à 20°C/min, elle se comporte en emballement thermique comme une batterie tout-solide réelle, c'est-à-dire réalisée avec les process industriels actuellement prévus.

Ainsi en réassemblant des batteries tout-solide à partir d'accumulateurs Li-ion à électrolyte liquide, selon les étapes a/ à i/ précédemment décrites, il est possible d'évaluer la sécurité de n'importe quelle technologie tout-solide avant que son développement ne soit mature.

Avec l'invention, il est donc envisageable lors du développement d'une nouvelle technologie de batterie lithium-métal ou sodium-métal tout-solide d'optimiser sa sécurité parallèlement à ses performances.

Cette méthode peut s'appliquer à pratiquement toutes les technologies de batteries tout solide. Il suffit de réaliser une encre avec l'électrolyte tout solide et d'en enduire une couche 14 sur la cathode 2. Le matériau de l'encre peut être avantageusement du POE, ou une céramique telle que LLZO, ou un sulfure.

D'autres avantages et améliorations pourront être apportées sans pour autant sortir du cadre de l'invention.

### Liste des références citées :

[1]: Xuning Feng, et al. « Thermal runaway mechanism of lithium-ion battery for electric vehicles: A review», Energy Storage Materials, Volume 10, January 2018, Pages 246-267.
[2]: Wensheng Huang et al. « Questions and Answers Relating to Lithium-Ion Battery Safety Issues», Cell Reports Physical Science, Volume 2, Issue 1, 20 January 2021, 100285.
[3]: Xiaolu Tian et al., "Design Strategies of Safe Electrolytes for Preventing Thermal Runaway in Lithium-Ion Batteries" Chem. Mater. 2020, 32, 23, 9821-9848. November 20, 2020.
[4]: "A modeling framework to assess spécifie energy, costs and environmental impacts of Li-ion and Na-ion batteries", Sustainable Energy & Fuels, Issue 11, 2019.
[5]: *"*Challenges for and Pathways toward Li-Metal-Based All-Solid-State Batteries", ACS Energy Lett. 2021, 6, 1399-1404.
[6]: "On rechargeability and reaction kinetics of sodium-air batteries" Energy & Environmental Science, Issue 11, 2014.
[7]: Rusong Chen et al., "The Thermal Stability of Lithium Solid Electrolytes with Metallic Lithium", Joule, Volume 4, ISSUE 4, P812-821, April 15, 2020.
[8]: Nathan Johnson et al., "Modeling Thermal Behavior and Safety of Large Format All-Solid-State Lithium Métal Batteries under Thermal Ramp and Short Circuit Conditions" The Electrochemical Society, Volume 169, Number 6, June 29, 2022.
[9]: Zhijie Bia et al. « Interface engineering on cathode side for solid garnet batteries», Chemical Engineering Journal, Volume 387, 1 May 2020, 124089.
[10]: Martin Finsterbusch et al., "High-Capacity Garnet-Based All-Solid-State Lithium Batteries: Fabrication and 3D-Microstructure Resolved Modeling" ACS Appl. Mater. Interfaces 2018, 10, 26, 22329-22339.
[11]: Jordi Sastre et al. "Aluminum-Assisted Densification of Cosputtered Lithium Garnet Electrolyte Films for Solid-State Batteries", ACS Appl. Energy Mater. 2019, 2, 12, 8511-8524.

## Revendications

1. Procédé de réalisation d'une batterie lithium-métal ou sodium-métal tout-solide comprenant les étapes suivantes :
a/ réalisation d'un accumulateur électrochimique lithium-métal ou sodium-métal comprenant un faisceau électrochimique (F) comportant au moins une cellule électrochimique (C) constituée d'une cathode (2) et d'une anode (3) de part et d'autre d'un séparateur (4) imprégné d'un électrolyte liquide, la cathode comprenant un substrat, formé d'un feuillard métallique qui supporte dans sa portion centrale un matériau actif d'insertion d'ion lithium ou sodium, l'anode étant constituée d'un substrat, formé d'un feuillard lithium ou sodium métallique et un emballage (6) agencé pour contenir le faisceau électrochimique (F) avec étanchéité,
b/ charge électrique de l'accumulateur de sorte à ce qu'il atteigne un état de charge électrique prédéterminé ;
c/ perçage de l'emballage ;
d/ enlèvement de l'électrolyte liquide ;
e/ ouverture de l'emballage ;
f/ séparation de l'anode, cathode et du séparateur les uns des autres ;
g/ dépôt par enduction d'au moins une couche d'encre formant un électrolyte tout-solide, sur la cathode, qui est chargée électriquement à l'état prédéterminé;
h/ réalisation d'un faisceau électrochimique (F') comportant au moins une cellule électrochimique (C) constituée de la cathode (2) séparée selon l'étape f/ et revêtue de la couche électrolyte tout-solide déposée selon l'étape g/ et soit de l'anode (3) séparée selon l'étape f/ soit d'une nouvelle anode constituée d'un substrat, formé d'un feuillard lithium ou sodium métallique.

2. Procédé selon la revendication 1, comprenant une étape i/ de mise en place d'un emballage agencé pour contenir le faisceau électrochimique (F') avec étanchéité.

3. Procédé selon la revendication 1 ou 2, les faisceaux électrochimiques (F, F') étant chacun constitué d'une seule cellule électrochimique (C) enroulée sur elle-même par bobinage.

4. Procédé selon 'une des revendication 1 à 3, l'étape d/ étant réalisée par évaporation sous vide.

5. Procédé selon la revendication 4, l'évaporation sous vide étant réalisée à au moins 70°C pendant une durée d'au moins 24 heures, de préférence égale à 48 heures.

6. Procédé selon l'une des revendications précédentes, l'étape g/ d'enduction étant réalisée au moyen d'une racle d'enduction fixe au-dessus de l'électrode à enduire tirée à vitesse sensiblement constante.

7. Procédé selon la revendication 6, l'étape g/ d'enduction étant réalisée pour obtenir une épaisseur de la couche d'électrolyte tout-solide sur l'électrode comprise entre 10 et 20 µm.

8. Procédé selon l'une des revendications précédentes, comprenant, entre l'étape f/ et l'étape g/, une étape f1/ de nettoyage de la cathode, et optionnellement de l'anode, avec du carbonate de diméthyle (DMC).

9. Procédé selon l'une des revendications 2 à 8, les emballages étant des boitiers, les étapes a/ et i/ comprenant le sertissage d'un couvercle de boitier.

10. Procédé selon l'une des revendications précédentes, le matériau de l'encre formant l'électrolyte tout-solide, déposée selon l'étape g/, étant choisi parmi les polymères, les oxydes et les sulfures ou un mélange de ceux-ci.

11. Procédé selon la revendication 10, le matériau de l'encre étant choisie parmi le poly(oxyéthylène) (POE), une céramique de type Li₇La₃Zr₂O₁₂ (LLZO).

12. Utilisation d'une batterie lithium-métal ou sodium-métal tout-solide réalisée selon le procédé d'une des revendications précédentes pour réaliser des essais abusifs thermiques.
